# EUROPEAN PATENT APPLICATION

(11) **EP 4 810 212 A1**
(43) Date of publication of application: **23.09.2026**
(21) Application number: 25902412.3
(22) Date of filing: 08.12.2025
(51) Int. Cl.: B25J 15/04, B25J 13/08, B25J 19/04

(54) **TOOL DISCRIMINATION DEVICE, WORKPIECE PROCESSING SYSTEM, AND TOOL DISCRIMINATION METHOD**

(30) Priority: 17.12.2024 JP 2024220483
(71) Applicant: MAYEKAWA MFG. CO., LTD., Tokyo 135-8482 (JP)
(72) Inventor: NOAKE, Tomoya, Tokyo 135-8482 (JP); TERADA, Naoto, Tokyo 135-8482 (JP)
(74) Representative: Regimbeau
(86) International application number: PCT/JP2025/042630
(87) International publication number: WO 2026/134009

(57) **Abstract**

The present application relates to a tool discrimination device for discriminating a tool attached to a tip of a robot arm in order to perform processing on a workpiece conveyed on a conveyance device. The tool discrimination device creates differential image data based on first image data obtained by imaging a background and second image data obtained by imaging the tool together with the background. By comparing the differential image data with registered image data registered in advance corresponding to the tool, it is determined whether a tool condition regarding at least one of a type or a state of the tool is satisfied.

## Description

### TECHNICAL FIELD

The present disclosure relates to a tool discrimination device, a workpiece processing system, and a tool discrimination method.

### BACKGROUND

A workpiece processing system using a robot arm equipped with a tool at its tip to perform processing on a workpiece is known. For example, Patent Document 1 discloses a robot arm with a tool attached to its tip that corresponds to the processing to be performed on the workpiece.

In this type of workpiece processing system, the appropriate type of tool corresponding to the content of processing performed on the workpiece needs to be attached to the tip of the robot arm in an appropriate state. For example, Patent Documents 2 to 4 disclose a technique for determining whether the tool attached to the tip of the robot arm meets a tool condition that defines at least one of the type or the state of the tool, based on image data obtained by imaging the tool attached to the robot arm.

### Citation List

### Patent Literature

Patent Document 1: JP2018-158405A
Patent Document 2: JP2022-101324A
Patent Document 3: JP2022-101326A
Patent Document 4: JP2023-74599A

### SUMMARY

### Problems to be Solved

In Patent Document 2, image data is obtained by capturing images with the tool position adjusted so that reflected light from the tool to be determined is maximized. Then, by performing mask processing on the image data obtained from image capture, an image area corresponding to the tool is extracted from the image data, and the tool condition is determined based on the sum of luminance values in the extracted image area. However, in Patent Document 2, it is necessary to create in advance mask data corresponding to each type and state of the tool to be determined, which requires a lot of labor and cost. Furthermore, since the position of the tool is adjusted using the reflected light from the tool during image capturing, the reflected light may change due to disturbance light or a subtle change in the posture of the tool, which may affect the determination accuracy.

In Patent Document 3, the type and state of the tool are determined by applying deep learning to image data obtained by imaging the tool. However, in Patent Document 3, it is necessary to construct a determination model for each type and state of the tool, which increases the development cost.

In Patent Document 4, distribution data in a three-dimensional coordinate system of a tool attached to a robot arm is acquired, and the tool condition is determined based on the distribution data. However, in Patent Document 4, since the determination is made based on the distribution data in the three-dimensional coordinate system, it is necessary to create a criterion for determining the type and state of the tool from the distribution data, which increases the development cost.

At least one embodiment of the present disclosure was made in view of the above circumstances, and an object thereof is to provide a tool discrimination device, a workpiece processing system, and a tool discrimination method capable of accurately determining the type and state of a tool by simple image analysis.

### Solution to the Problems

In order to solve the above problems, a tool discrimination device according to at least one embodiment of the present disclosure is a tool discrimination device for discriminating a tool attached to a tip of a robot arm in order to perform processing on a workpiece conveyed on a conveyance device, the tool discrimination device including:
an image data acquisition unit for acquiring first image data obtained by imaging a background, and second image data obtained by imaging the tool together with the background;
a differential image data creation unit for creating differential image data based on the first image data and the second image data; and
a tool condition determination unit for determining whether a tool condition regarding at least one of a type or a state of the tool is satisfied by comparing the differential image data with registered image data registered in advance corresponding to the tool.

In order to solve the above problems, a workpiece processing system according to at least one embodiment of the present disclosure includes the tool discrimination device according to at least one embodiment of the present disclosure.

In order to solve the above problems, a tool discrimination method according to at least one embodiment of the present disclosure is a tool discrimination method for discriminating a tool attached to a tip of a robot arm in order to perform processing on a workpiece conveyed on a conveyance device, the tool discrimination method including:
a step of acquiring first image data obtained by imaging a background, and second image data obtained by imaging the tool together with the background;
a step of creating differential image data based on the first image data and the second image data; and
a step of determining whether a tool condition regarding at least one of a type or a state of the tool is satisfied by comparing the differential image data with registered image data registered in advance corresponding to the tool.

### Advantageous Effects

At least one embodiment of the present disclosure provides a tool discrimination device, a workpiece processing system, and a tool discrimination method capable of accurately determining the type and state of a tool by simple image analysis.

### BRIEF DESCRIPTION OF DRAWINGS

FIG. 1 is a schematic configuration diagram showing an overall configuration of a workpiece processing system according to an embodiment.
FIG. 2 is a block configuration diagram of the tool discrimination device of FIG. 1.
FIG. 3 is a flowchart showing a tool discrimination method performed by the tool discrimination unit of FIG. 2.
FIG. 4 is a diagram conceptually showing a step of creating differential image data in step S105 of FIG. 3.
FIG. 5A is a diagram showing one matching example between discrimination image data and registered image data in step S108 of FIG. 3.
FIG. 5B is a diagram showing another matching example between discrimination image data and registered image data in step S108 of FIG. 3.
FIG. 6 is a flowchart showing a method of registering registered image data performed by the image data registration unit of FIG. 2.

### DETAILED DESCRIPTION

Embodiments of the present invention will now be described in detail with reference to the accompanying drawings. It is intended, however, that unless particularly identified, dimensions, materials, shapes, relative positions, and the like of components described in the embodiments shall be interpreted as illustrative only and not intended to limit the scope of the present invention.

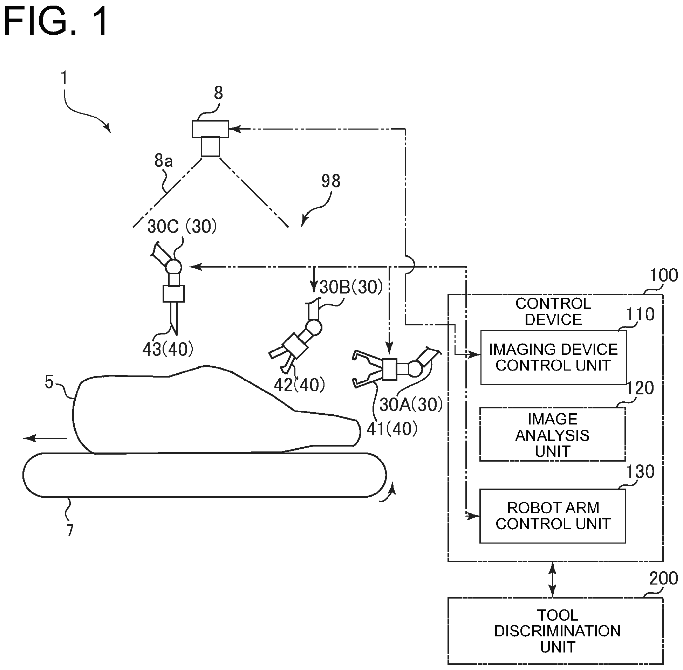

FIG. 1 is a schematic configuration diagram showing an overall configuration of a workpiece processing system 1 according to an embodiment. The workpiece processing system 1 is a system for performing processing on a workpiece 5 using a tool 40 attached to a robot arm 30. The workpiece 5 is, for example, a food product such as an agricultural product, a livestock product, or a marine product, and may be either a fresh food product or a processed food product. The processing performed on the workpiece 5 is not limited, but cutting processing, clamping processing, chucking processing, or a combination thereof on the workpiece 5 will be described as examples of some processing. Specific examples of other processing include pressing processing, tapping processing, fluid discharge processing, light irradiation processing, or the like on the workpiece 5.

The workpiece processing system 1 includes a conveyance device 7 for conveying the workpiece 5, a robot arm 30 for performing processing on the workpiece 5, an imaging device 8 (camera) for imaging the workpiece 5 conveyed by the conveyance device 7, a control device 100, and a tool discrimination device 200.

The conveyance device 7 is a belt conveyor configured to convey the workpiece 5 in a substantially horizontal direction. The workpiece 5 conveyed by the conveyance device 7 is processed by the robot arm 30 at a predetermined position. At the position, the conveyance device 7 also functions as a workbench for performing processing on the workpiece 5.

The robot arm 30 is an industrial robot realized by a vertical articulated robot, a horizontal articulated robot, or a combination thereof. The tool 40 corresponding to the processing performed on the workpiece 5 is attached to the tip of the robot arm 30. In FIG. 1, robot arms 30A, 30B, and 30C operable in conjunction with each other are shown as the robot arm 30.

The tool 40 is attached to the tip of the robot arm 30. The tool 40 includes a clamper 41 for performing clamping processing to fix the workpiece 5, a chuck 42 for performing chucking processing to grip the workpiece 5, and a knife 43 for performing cutting processing to cut the workpiece 5. In FIG. 1, the clamper 41 is attached to the tip of the robot arm 30A, the chuck 42 is attached to the tip of the robot arm 30B, and the knife 43 is attached to the tip of the robot arm 30C. Both the clamper 41 and the chuck 42 are connected to an actuator (not shown), and are configured such that the state (for example, open/close state, expansion/contraction state, etc.) can be changed by driving the actuator. The actuator may be, for example, an air cylinder, a hydraulic cylinder, or a motor.

The control device 100 is configured to control the workpiece processing system 1 and includes, for example, a Central Processing Unit (CPU), a Random Access Memory (RAM), a Read Only Memory (ROM), a computer-readable storage medium, and the like. Then, a series of processes for realizing various functions is stored in the storage medium or the like in the form of a program, as an example. The CPU reads the program out to the RAM or the like and executes processing/calculation of information, thereby realizing the various functions. A configuration where the program is installed in the ROM or another storage medium in advance, a configuration where the program is provided in a state of being stored in the computer-readable storage medium, a configuration where the program is distributed via a wired or wireless communication means, etc., may be applied. The computer-readable storage medium may be a magnetic disk, a magneto-optical disk, a CD-ROM, a DVD-ROM, or a semiconductor memory.

The control device 100 can perform processing on the workpiece 5 on the conveyance device 7 by respectively controlling the imaging device 8, the robot arm 30, and the tool 40, and includes an imaging device control unit 110, an image analysis unit 120, and a robot arm control unit 130.

The imaging device control unit 110 is configured to control an imaging operation by the imaging device 8. Specifically, the imaging device control unit 110 transmits an imaging signal to the imaging device 8 at a predetermined timing to execute the imaging operation by the imaging device 8, and acquires image data by the imaging operation.

The image analysis unit 120 is configured to specify the position and posture of the workpiece 5 included in image data by analyzing the image data acquired by the imaging device 8. The analysis result by the image analysis unit 120 is sent to the robot arm control unit 130 and used for controlling the robot arm 30.

In the present embodiment, an example is shown in which the imaging device 8 serves as both an imaging device for capturing image data used when the control device 100 controls the robot arm 30 and the tool 40, and an imaging device for capturing image data used by the tool discrimination device 200 to discriminate the tool 40. In another aspect, a different imaging device may be used for an imaging device for capturing image data used when the control device 100 controls the robot arm 30 and the tool 40, and an imaging device for capturing image data used by the tool discrimination device 200 to discriminate the tool 40.

The robot arm control unit 130 is configured to control at least one of the position, the posture, or the state of the tool 40 attached to the tip of the robot arm 30 by controlling the robot arm 30. Specifically, the robot arm control unit 130 specifies the position and posture of the workpiece 5 on the conveyance device 7 based on the analysis result acquired from the image analysis unit 120, and controls the robot arm 30 so that predetermined processing is performed based on the specified position and posture of the workpiece 5.

In this way, in the control device 100, the predetermined processing can be performed by cooperatively controlling the robot arm 30 and the tool 40 according to the position and posture of the workpiece 5 on the conveyance device 7 specified based on the image data captured by the imaging device 8.

The tool discrimination device 200 is configured to discriminate the tool 40 attached to the tip of the robot arm 30. The tool 40 is discriminated by determining whether the tool 40 actually attached to the tip of the robot arm 30 satisfies a tool condition that defines at least one of an appropriate type or state of the tool 40 corresponding to the processing to be performed on the workpiece 5 in the workpiece processing system 1.

The tool condition is set corresponding to each of the robot arms 30A, 30B, and 30C. For example, if the clamper 41 in an open state is to be attached to the robot arm 30A, the tool type and the tool state corresponding to the robot arm 30A are the "clamper 41" and the "open state", respectively. To give another example, if the chuck 42 in the open state is to be attached to the robot arm 30B, the tool type and the tool state corresponding to the robot arm 30B are the "chuck 42" and the "open state", respectively.

The tool 40 is attached to the tip of the robot arm 30, for example, manually by an operator. Therefore, if the operator makes an error in attaching the tool 40 to the tip of the robot arm 30, the tool condition is not satisfied. As a more specific example, the tool type is not satisfied if the tool 40 of a different type from the tool 40 to be attached is erroneously attached to the robot arm 30. To give another example, an error may occur in an operation of connecting the air cylinder as the actuator and the clamper 41 by using an air pipe. In this case, the clamper 41 enters the closed state although the clamper 41 should enter the open state during the operation of the air cylinder, and the tool state is not satisfied. To give still another example, the tool state is not satisfied if the tool 40 is attached in a reverse attachment posture in the up-down direction.

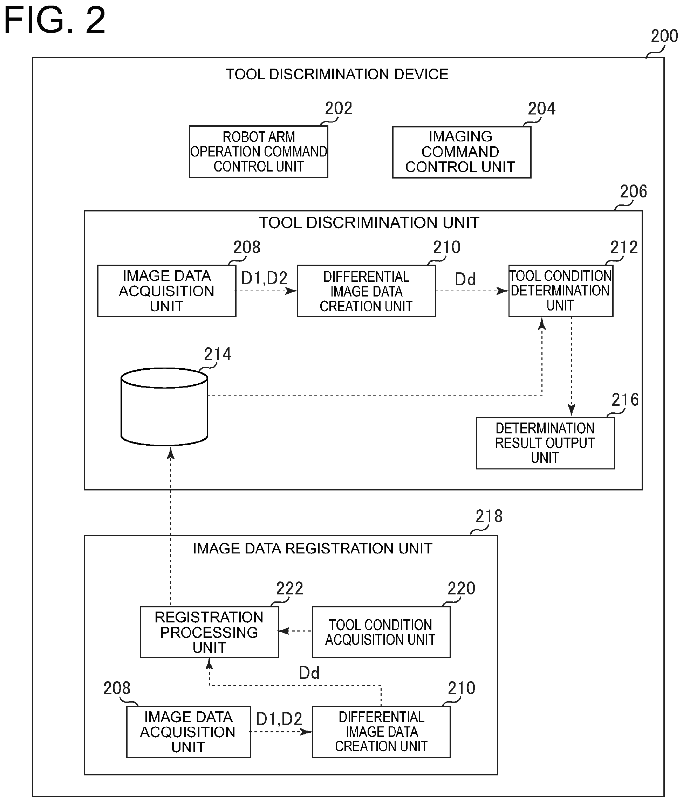

FIG. 2 is a block configuration diagram of the tool discrimination device 200 of FIG. 1. The tool discrimination device 200 includes a robot arm operation command control unit 202 and an imaging command control unit 204. The robot arm operation command control unit 202 is configured to perform operation control of the robot arm 30 via the robot arm control unit 130 by transmitting an operation command to the robot arm control unit 130 of the control device 100 described above. In addition, the imaging command control unit 204 is configured to perform an imaging operation by the imaging device 8 via the imaging device control unit 110 by transmitting an imaging command to the imaging device control unit 110 of the control device 100 described above.

In the present embodiment, in particular, the robot arm operation command control unit 202 and the imaging command control unit 204 control the robot arm 30 and the imaging device 8 so as to be interlocked with each other, thereby making it possible to capture image data in which the position of the tool 40 attached to the tip of the robot arm 30 is appropriately adjusted with respect to the imaging range of the imaging device 8.

In the present embodiment, the tool discrimination device 200 is configured to indirectly control the imaging device 8 and the robot arm 30 via the control device 100 for controlling the workpiece processing system 1, by transmitting commands to the imaging device control unit 110 and the robot arm control unit 130 of the control device 100 by the robot arm operation command control unit 202 and the imaging command control unit 204, respectively. As a result, the tool discrimination method, which will be described later, can be performed using an existing configuration for performing processing on the workpiece 5, so that the need for additionally installing a configuration to perform the tool discrimination method can be effectively reduced.

The tool discrimination device 200 may directly control the imaging device 8 and the robot arm 30 by transmitting control signals to the imaging device 8 and the robot arm 30 without passing through the control device 100.

Further, the tool discrimination device 200 further includes a tool discrimination unit 206 as a configuration for performing the tool discrimination method to discriminate the tool 40 attached to the tip of the robot arm 30 using the image data captured in cooperation with the imaging device 8 and the robot arm 30 as described above. The tool discrimination unit 206 includes an image data acquisition unit 208, a differential image data creation unit 210, a tool condition determination unit 212, a registered image database 214, and a determination result output unit 216.

The tool discrimination device 200 further includes an image data registration unit 218 for registering new image data in the registered image database 214 of the tool discrimination unit 206. The image data registration unit 218 includes an image data acquisition unit 208, a differential image data creation unit 210, a tool condition acquisition unit 220, and a registration processing unit 222.

For convenience of explanation, FIG. 2 illustrates the case where the image data registration unit 218 includes the image data acquisition unit 208 and the differential image data creation unit 210 redundantly with the tool discrimination unit 206, but the image data acquisition unit 208 and the differential image data creation unit 210 may be provided in only one of the tool discrimination unit 206 or the image data registration unit 218.

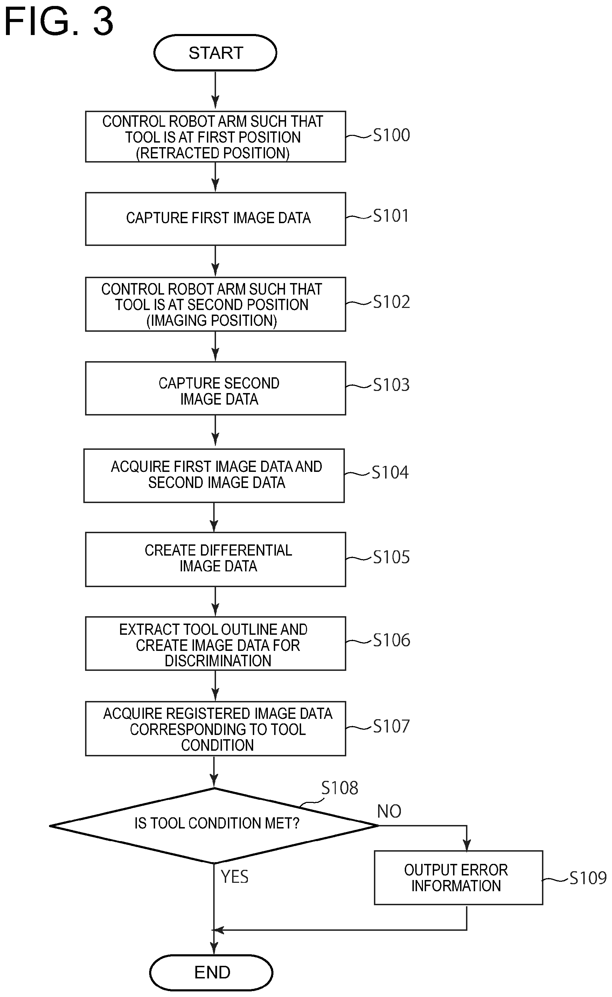

Next, a tool discrimination method executed by the tool discrimination unit 206 will be described. The tool discrimination method is a method for discriminating at least one of the type or the state of the tool 40 attached to the tip of the robot arm 30 in the workpiece processing system 1 having the above configuration. FIG. 3 is a flowchart showing the tool discrimination method performed by the tool discrimination unit 206 of FIG. 2.

First, the robot arm operation command control unit 202 transmits an operation command to the robot arm control unit 130 to control the robot arm 30 so that the tool 40 attached to the tip of the robot arm 30 is at the first position P1 (step S100). The first position P1 is outside the imaging range 8a of the imaging device 8, and is a position where the first image data D1 consisting only of the background, without including the robot arm 30 and the tool 40, can be captured by the imaging device 8 in the subsequent step S101.

Subsequently, the imaging command control unit 204 transmits an imaging command to the imaging device control unit 110, whereby the imaging device 8 captures the first image data D1 (step S101). At this time, since the tool 40 attached to the tip of the robot arm 30 is moved to the first position P1 in step S100 and is outside the imaging range 8a of the imaging device 8, the first image data D1 including only the background is captured.

The control of the robot arm 30 in step S100 may be performed based on the first reference coordinate system xyz of the imaging device 8. When the robot arm 30 is controlled by the robot arm control unit 130 during processing of the workpiece 5 in the workpiece processing system 1, basically, the robot arm 30 is controlled based on the second reference coordinate system XYZ of the robot arm 30. In contrast, in step S100, the robot arm 30 may be controlled based on the first reference coordinate system xyz of the imaging device 8. In this case, the position of the tool 40 in the imaging range 8a of the imaging device 8 can be appropriately controlled outside the imaging range 8a of the imaging device 8, and when imaging is performed by the imaging device 8 in step S101, the first image data D1 consisting only of the background without including the tool 40 can be suitably obtained.

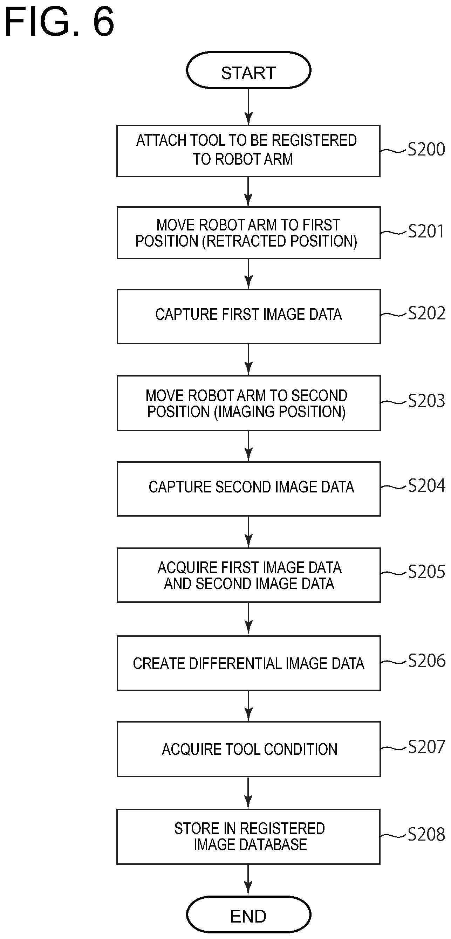

Subsequently, the robot arm operation command control unit 202 transmits an operation command to the robot arm control unit 130 to control the robot arm 30 so that the tool 40 attached to the tip of the robot arm 30 is at the second position P2 (step S102). The second position P2 is within the imaging range 8a of the imaging device 8, and is defined in advance so that the tool 40 appears at a predetermined position in image data captured by the imaging device 8 in subsequent step S103. The second position P2 may be defined in advance as a position to which the tool 40 is moved in step S203 when registering the registered image data Dr, as described later with reference to FIG. 6.

Subsequently, the imaging command control unit 204 transmits an imaging command to the imaging device control unit 110, whereby the imaging device 8 captures the second image data D2 (step S103). At this time, since the tool 40 attached to the tip of the robot arm 30 is moved to the second position P2 in step S102 and is within the imaging range 8a of the imaging device 8, the second image data D2 including the tool 40 at the predetermined position is captured.

The control of the robot arm 30 in step S102 is performed based on the first reference coordinate system xyz of the imaging device 8. When the robot arm 30 is controlled by the robot arm control unit 130 during processing of the workpiece 5 in the workpiece processing system 1, basically, the robot arm 30 is controlled based on the second reference coordinate system XYZ of the robot arm 30. In contrast, in step S102, the robot arm 30 may be controlled based on the first reference coordinate system xyz of the imaging device 8. In this case, the position of the tool 40 in the imaging range 8a of the imaging device 8 can be accurately controlled to a predetermined position within the imaging range 8a of the imaging device 8, and when imaging is performed by the imaging device 8 in step S103, the second image data D2 including the tool 40 at the predetermined position can be suitably obtained.

Furthermore, each of the first image data D1 and the second image data D2 may be captured within a predetermined time. That is, the capturing of the first image data D1 in step S101 and the capturing of the second image data D2 in step S103 may be performed at sufficiently short time intervals within the predetermined time. As a result, differences are less likely to occur between the backgrounds (including an object placed on the conveyance device 7, dirt adhering to the conveyance device 7, etc.) respectively included in the first image data D1 and the second image data D2. Therefore, when creating the differential image data Dd based on the first image data D1 and the second image data D2 as described later, it is possible to obtain the differential image data Dd in which the image area corresponding to the tool 40 is suitably extracted from the second image data D2.

Additionally, each of the first image data D1 and the second image data D2 may be captured in a state where the conveyance device 7 is stopped. In this case, the conveyance device 7 is controlled in conjunction with the imaging device 8 and the robot arm 30, whereby the conveyance device 7 is stopped at least temporarily at a timing when imaging is performed by the imaging device 8. As a result, differences are less likely to occur between the backgrounds (including an object placed on the conveyance device 7, dirt adhering to the conveyance device 7, etc.) respectively included in the first image data D1 and the second image data D2. Therefore, when creating the differential image data Dd based on the first image data D1 and the second image data D2, it is possible to obtain the differential image data Dd in which the image area corresponding to the tool 40 is suitably extracted from the second image data D2.

Subsequently, the first image data D1 captured in step S101 and the second image data D2 captured in step S103 are acquired by the image data acquisition unit 208 (step S104). Then, the differential image data creation unit 210 creates differential image data Dd based on the first image data D1 and the second image data D2 acquired in step S104 (step S105). The differential image data Dd is created as a difference between the first image data D1 and the second image data D2. More specifically, the differential image data Dd is created as image data having pixels in which a difference in luminance value is calculated for each pixel of the first image data D1 and the second image data D2, and the difference is used as a luminance value.

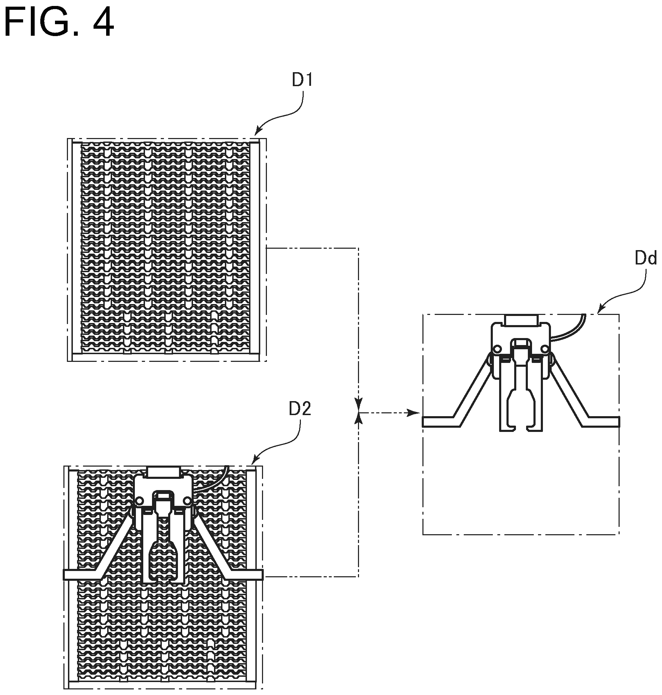

Here, FIG. 4 is a diagram conceptually showing a step of creating the differential image data Dd in step S105 of FIG. 3. In this example, the tool 40 is not shown in the first image data D1, and only the conveyance device 7 is shown as a background, and the tool 40 of a predetermined type and state is shown together with the background in the second image data D2. In the differential image data Dd created from such first image data D1 and second image data D2, the background of the first image data D1 is removed from the second image data D2, so that only the tool 40 shown in the second image data D2 is left.

Subsequently, the tool condition determination unit 212 extracts the outline of the tool 40 from the differential image data Dd created in step S105 to obtain discrimination image data Da (step S106). In addition, the tool condition determination unit 212 accesses the registered image database 214 to acquire the registered image data Dr corresponding to the tool condition from among a large number of pieces of registered image data stored in the registered image database 214 (step S107). In other words, by searching the registered image database 214 based on the tool condition defining at least one of the type or the state of the correct tool 40 to be attached to the tip of the robot arm 30, the registered image data Dr corresponding to the tool condition is acquired.

Subsequently, the tool condition determination unit 212 compares the discrimination image data Da acquired in step S106 with the registered image data Dr acquired in step S107 to determine whether the tool 40 attached to the tip of the robot arm 30 satisfies the tool condition (step S108). The discrimination image data Da and the registered image data Dr are compared based on, for example, whether the matching rate between image areas corresponding to the tool 40 included in both of them is equal to or greater than a reference value.

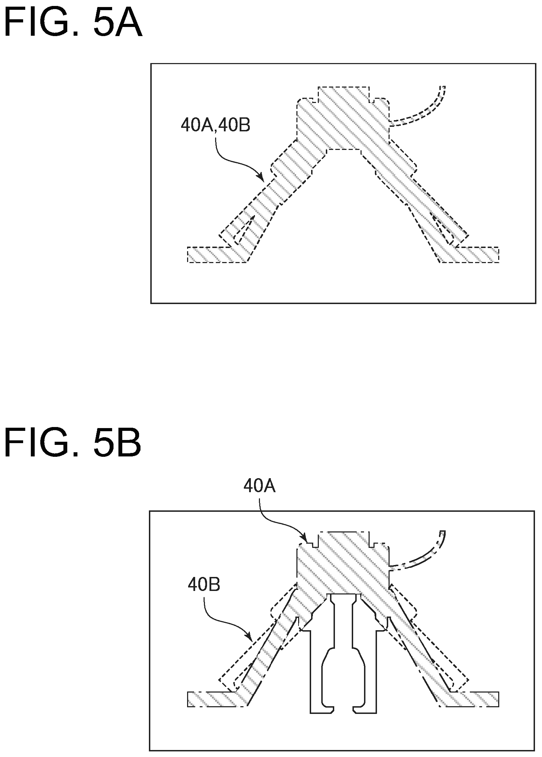

Here, FIGs. 5A and 5B are diagrams showing a matching example between the discrimination image data Da and the registered image data Dr in step S108 of FIG. 3. In the example shown in FIG. 5A, since the matching rate of the image areas corresponding to the tool 40A included in the discrimination image data Da and the tool 40B included in the registered image data Dr is equal to or greater than the reference value, it is determined that the tool condition is satisfied. On the other hand, in the example shown in FIG. 5B, since the matching rate of the image areas corresponding to the tool 40A included in the discrimination image data Da and the tool 40B included in the registered image data Dr is less than the reference value, it is determined that the tool condition is not satisfied.

As described above, when it is determined that the tool condition is satisfied (step S108: YES), the tool condition determination unit 212 discriminates that the tool 40 attached to the tip of the robot arm 30 is correct. On the other hand, when it is determined that the tool condition is not satisfied (step S108: NO), error information indicating that fact is output from the determination result output unit 216 (step S109).

Next, a method of registering the registered image data Dr to the registered image database 214 performed by the image data registration unit 218 will be described. FIG. 6 is a flowchart showing the method of registering the registered image data Dr performed by the image data registration unit 218 of FIG. 2.

First, the tool 40 to be registered is attached to the tip of the robot arm 30 (step S200). The tool 40 to be registered is, for example, a tool 40 that needs to be newly registered because the registered image data Dr of the tool 40 corresponding to the same type and state is not stored in the registered image database 214. The tool 40 to be registered may be a tool 40 that already has registered image data Dr corresponding to the same type and state stored in the registered image database 214, but needs to be re-registered in order to update the registered image data Dr.

Subsequently, similarly to steps S100 and S101 described above, the robot arm 30 is controlled by the robot arm operation command control unit 202 to move the tool 40 attached to the tip of the robot arm 30 to the first position P1 (step S201), and the imaging device 8 is controlled by the imaging command control unit 204 to capture the first image data D1 (step S202).

Subsequently, similarly to steps S102 and S103 described above, the robot arm 30 is controlled by the robot arm operation command control unit 202 to move the tool 40 attached to the tip of the robot arm 30 to the second position P2 (step S203), and the imaging device 8 is controlled by the imaging command control unit 204 to capture the second image data D2 (step S204). The second position P2 to which the tool 40 is moved in step S102 described above in order to discriminate the tool 40 is defined in advance as the second position P2 to which the tool 40 is moved in step S203 when registering the registered image data Dr in this way.

Subsequently, similarly to step S104 described above, the image data acquisition unit 208 acquires the first image data D1 captured in step S202 and the second image data D2 captured in step S204 (step S205). Then, similarly to step S105 described above, the differential image data creation unit 210 creates the differential image data Dd based on the first image data D1 and the second image data D2 acquired in step S205 (step S206).

Subsequently, the tool condition acquisition unit 220 acquires the tool condition (step S207). The tool condition is information regarding the type and state of the tool 40 attached to the tip of the robot arm 30 in step S200, and is input by, for example, the operator who performed the attachment work.

Subsequently, the registration processing unit 222 associates the differential image data Dd created in step S206 with the tool condition acquired in step S207, and registers it in the registered image database 214 as the registered image data Dr (step S208). The registered image data Dr thus registered in the registered image database 214 can be searched based on the tool condition, and can be appropriately read out.

As described above, according to each of the above embodiments, the differential image data Dd is created based on the first image data D1 obtained by imaging the background and the second image data D2 obtained by imaging the tool 40 together with the background. The differential image data Dd includes an image area corresponding to the tool 40 obtained by removing the background from the second image data D2. By comparing the differential image data Dd with registered image data Dr registered in advance corresponding to the tool 40 to be discriminated, it is determined whether the tool 40 included in the differential image data Dd satisfies a tool condition regarding at least one of the type or the state of the tool 40. As a result, it is possible to suitably discriminate whether the tool 40 attached to the tip of the robot arm 30 is of an appropriate type or state.

The contents described in some embodiments described above would be understood as follows, for instance.
(1) A tool discrimination device according to one aspect is a tool discrimination device for discriminating a tool attached to a tip of a robot arm in order to perform processing on a workpiece conveyed on a conveyance device, the tool discrimination device including:
   an image data acquisition unit for acquiring first image data obtained by imaging a background, and second image data obtained by imaging the tool together with the background;
   a differential image data creation unit for creating differential image data based on the first image data and the second image data; and
   a tool condition determination unit for determining whether a tool condition regarding at least one of a type or a state of the tool is satisfied by comparing the differential image data with registered image data registered in advance corresponding to the tool.

According to the aspect (1), the differential image data is created based on the first image data obtained by imaging the background and the second image data obtained by imaging the tool together with the background. The differential image data includes an image area corresponding to the tool obtained by removing the background from the second image data. By comparing the differential image data with registered image data registered in advance corresponding to the tool to be discriminated, it is determined whether the tool included in the differential image data satisfies a tool condition regarding at least one of the type or the state of the tool. As a result, it is possible to suitably discriminate whether the tool attached to the tip of the robot arm is of an appropriate type or state.

(2) In another aspect, in the above aspect (1),
the first image data is captured in a state where the tool is moved by the robot arm to a first position outside an imaging range, and
the second image data is captured in a state where the tool is moved by the robot arm to a second position within the imaging range.

According to the aspect (2), the first image data and the second image data can be suitably obtained by controlling the movement of the tool by the robot arm in conjunction with the imaging operation. Specifically, the first image data with the background is obtained by capturing the image in a state where the tool is moved by the robot arm to the first position outside the imaging range. Also, the second image data with the tool and the background is obtained by capturing the image in a state where the tool is moved by the robot arm to the second position within the imaging range.

(3) In another aspect, in the above aspect (1) or (2),
the tool discrimination device further includes a registered image database in which the registered image data is registered for each tool condition, and
the tool condition determination unit acquires the registered image data by searching the registered image database based on the tool condition.

According to the aspect (3), the registered image database is provided in which the registered image data used for the tool discrimination is registered. In the registered image database, the registered image data is registered in advance in association with the tool condition regarding at least one of the type or the state of the tool, and the registered image data necessary for tool discrimination can be searched based on the tool condition.

(4) In another aspect, in any one of the above aspects (1) to (3),
the tool discrimination device further includes a registration processing unit for associating the differential image data with the tool condition and registering the differential image data in the registered image database as the registered image data.

According to the aspect (4), the differential image data created by imaging the tool attached to the tip of the robot arm can be registered in the registered image database in association with the tool condition corresponding to the tool. The registered image data registered in the registered image database can be used for tool discrimination by being appropriately read out as described above.

(5) In another aspect, in any one of the above aspects (1) to (4),
the robot arm is controlled based on a coordinate system corresponding to the first image data and the second image data.

According to the aspect (5), when capturing the first image data and the second image data, the robot arm is controlled based on the coordinate system corresponding to the first image data and the second image data. Thus, by controlling the robot arm so that the tool is out of the imaging range when capturing the first image data, the first image data consisting of the background not including the tool can be suitably obtained. Furthermore, by controlling the robot arm so that the tool is within the imaging range when capturing the second image data, the second image data including the tool together with the background can be suitably obtained.

(6) In another aspect, in any one of the above aspects (1) to (5),
each of the first image data and the second image data is captured within a predetermined time.

According to the aspect (6), by capturing the first image data and the second image data within a predetermined time (relatively short time interval), a difference is less likely to occur between the backgrounds included in them. Therefore, as a difference between the first image data and the second image data, it is possible to obtain the differential image data in which the image area corresponding to the tool is suitably extracted from the second image data.

(7) In another aspect, in any one of the above aspects (1) to (6),
each of the first image data and the second image data is captured in a state where the conveyance device is stopped.

According to the aspect (7), each of the first image data and the second image data is captured in a state where the conveyance device is stopped, so that a difference is less likely to occur between the backgrounds (including an object placed on the conveyance device, dirt adhering to the conveyance device, etc.) included in the first image data and the second image data. By using such first image data and second image data, as a difference between the first image data and the second image data, it is possible to obtain the differential image data in which the image area corresponding to the tool is suitably extracted from the second image data.

(8) In another aspect, in any one of the above aspects (1) to (7),
the first image data and the second image data are captured using an imaging device for imaging the workpiece on the conveyance device in order to control at least one of the conveyance device or the robot arm.

According to the aspect (8), the first image data and the second image data used for the workpiece discrimination are captured using an imaging device that images the workpiece when processing is performed on the workpiece. This eliminates the need for additionally installing a new imaging device for the workpiece discrimination, and the scale of the device can be suitably suppressed.

(9) In another aspect, in any one of the above aspects (1) to (8),
the tool includes at least one of a chuck tool, a clamper, or a knife tool.

According to the aspect (9), a tool including at least one of a chuck tool, a clamper, or a knife tool can be suitably discriminated.

(10) A workpiece processing system according to one aspect includes the tool discrimination device according to any one of the aspects (1) to (9).

According to the aspect (10), in the workpiece processing system, it is possible to suitably discriminate the tool attached to the tip of the robot arm in order to perform processing on the workpiece.

(11) A tool discrimination method according to one aspect is a tool discrimination method for discriminating a tool attached to a tip of a robot arm in order to perform processing on a workpiece conveyed on a conveyance device, the tool discrimination method including:
a step of acquiring first image data obtained by imaging a background, and second image data obtained by imaging the tool together with the background;
a step of creating differential image data based on the first image data and the second image data; and
a step of determining whether a tool condition regarding at least one of a type or a state of the tool is satisfied by comparing the differential image data with registered image data registered in advance corresponding to the tool.

According to the aspect (11), the differential image data is created based on the first image data obtained by imaging the background and the second image data obtained by imaging the tool together with the background. The differential image data includes an image area corresponding to the tool obtained by removing the background from the second image data. By comparing the differential image data with registered image data registered in advance corresponding to the tool to be discriminated, it is determined whether the tool included in the differential image data satisfies a tool condition regarding at least one of the type or the state of the tool. As a result, it is possible to suitably discriminate whether the tool attached to the tip of the robot arm is of an appropriate type or state.

### Reference Signs List

- 1: Workpiece processing system
- 5: Workpiece
- 7: Conveyance device
- 8: Imaging device
- 8a: Imaging range
- 30 (30A, 30B, 30C): Robot arm
- 40: Tool
- 41: Clamper
- 42: Chuck
- 43: Knife
- 100: Control device
- 110: Imaging device control unit
- 120: Image analysis unit
- 130: Robot arm control unit
- 200: Tool discrimination device
- 202: Robot arm operation command control unit
- 204: Imaging command control unit
- 206: Tool discrimination unit
- 208: Image data acquisition unit
- 210: Differential image data creation unit
- 212: Tool condition determination unit
- 214: Registered image database
- 216: Determination result output unit
- 218: Image data registration unit
- 220: Tool condition acquisition unit
- 222: Registration processing unit
- D1: First image data
- D2: Second image data
- Da: Discrimination image data
- Dd: Differential image data
- Dr: Registered image data
- P1: First position
- P2: Second position

## Claims

1. A tool discrimination device for discriminating a tool attached to a tip of a robot arm in order to perform processing on a workpiece conveyed on a conveyance device, the tool discrimination device comprising:
an image data acquisition unit for acquiring first image data obtained by imaging a background, and second image data obtained by imaging the tool together with the background;
a differential image data creation unit for creating differential image data based on the first image data and the second image data; and
a tool condition determination unit for determining whether a tool condition regarding at least one of a type or a state of the tool is satisfied by comparing the differential image data with registered image data registered in advance corresponding to the tool.

2. The tool discrimination device according to claim 1, wherein
the first image data is captured in a state where the tool is moved by the robot arm to a first position outside an imaging range, and
the second image data is captured in a state where the tool is moved by the robot arm to a second position within the imaging range.

3. The tool discrimination device according to claim 1 or 2, further comprising:
a registered image database in which the registered image data is registered for each tool condition,
wherein the tool condition determination unit acquires the registered image data by searching the registered image database based on the tool condition.

4. The tool discrimination device according to claim 1 or 2, further comprising:
a registration processing unit for associating the differential image data with the tool condition and registering the differential image data in the registered image database as the registered image data.

5. The tool discrimination device according to claim 1 or 2, wherein
the robot arm is controlled based on a coordinate system corresponding to the first image data and the second image data.

6. The tool discrimination device according to claim 1 or 2, wherein
each of the first image data and the second image data is captured within a predetermined time.

7. The tool discrimination device according to claim 1 or 2, wherein
each of the first image data and the second image data is captured in a state where the conveyance device is stopped.

8. The tool discrimination device according to claim 1 or 2, wherein
the first image data and the second image data are captured using an imaging device for imaging the workpiece on the conveyance device in order to control at least one of the conveyance device or the robot arm.

9. The tool discrimination device according to claim 1 or 2, wherein
the tool includes at least one of a chuck tool, a clamper, or a knife tool.

10. A workpiece processing system, comprising the tool discrimination device according to claim 1 or 2.

11. A tool discrimination method for discriminating a tool attached to a tip of a robot arm in order to perform processing on a workpiece conveyed on a conveyance device, the tool discrimination method comprising:
a step of acquiring first image data obtained by imaging a background, and second image data obtained by imaging the tool together with the background;
a step of creating differential image data based on the first image data and the second image data; and
a step of determining whether a tool condition regarding at least one of a type or a state of the tool is satisfied by comparing the differential image data with registered image data registered in advance corresponding to the tool.
